# NOUVEAU FASCICULE DE BREVET EUROPEEN

(11) **EP 0 352 158 B2**
(45) Date de publication et mention de la décision concernant l'opposition: **01.05.1996**
(45) Mention de la délivrance du brevet: 04.09.1991
(21) Numéro de dépôt: 89401869.6
(22) Date de dépôt: 29.06.1989
(51) Int. Cl.: F28D 1/04, F28F 9/02, F01P 7/16

(54) **Dispositif d'échangeur de chaleur pour plusieurs circuits de refroidissement utilisant un même fluide caloporteur**
Wärmeaustauschvorrichtung für mehrere Kühlkreisläufe, das gleiche Wärmeaustauschmedium nutzend
Heat exchange apparatus for a plurality of coding-circuits using the same heat-exchange medium

(30) Priorité: 20.07.1988 FR 8809827
(43) Date de publication de la demande: 24.01.1990
(73) Titulaire: VALEO THERMIQUE MOTEUR, F-78320 Le Mesnil Saint-Denis (FR)
(72) Inventeur: Marsais, Christian, F-78120 Rambouillet (FR); Simonin, Michel, F-78180 Montigny (FR)
(74) Mandataire: Gamonal, Didier

(56) Documents cités:
- DE-A- 2 423 440
- DE-C- 3 317 983
- FR-A- 1 011 031
- FR-A- 2 349 731
- FR-A- 2 476 826
- US-A- 2 264 820
- US-A- 4 535 729
- US-A- 4 620 509

## Description

L'invention concerne un dispositif d'échangeur de chaleur pour plusieurs circuits de refroidissement utilisant un même fluide caloporteur, en particulier pour véhicules automobiles selon le préambule de la revendication 1. Un tel échangeur est connu selon le document US-A-4535729 Pour refroidir un moteur à combustion interne d'un véhicule automobile, on utilise classiquement un circuit de refroidissement propre à faire circuler un fluide caloporteur, généralement de l'eau additionnée d'antigel, à travers le bloc moteur pour y prélever de l'énergie calorifique et la restituer au milieu extérieur par échange thermique avec de l'air dans un échangeur de chaleur, communément appelé radiateur de refroidissement.

Il est connu également d'utiliser ce fluide caloporteur dans un ou plusieurs circuits de refroidissement secondaires, notamment pour refroidir l'huile de lubrification du moteur ou encore pour refroidir l'air de suralimentation provenant d'un turbo-compresseur. Le ou chaque circuit secondaire comprend alors un échangeur de chaleur secondaire qui est monté en série avec l'échangeur de chaleur principal servant au refroidissement du moteur.

Cette solution n'est pas satisfaisante car il existe des antagonismes thermiques qui ne permettent pas d'optimiser la taille des échangeurs ou leur rendement thermique.

En effet, il est nécessaire que les échangeurs secondaires fonctionnent à une température beaucoup plus basse que l'échangeur principal servant au refroidissement du moteur.

Par ailleurs, l'échangeur destiné au refroidissement de l'air de suralimentation doit travailler avec des débits relativements faible alors que l'échangeur destiné au refroidissement d'huile doit travailler avec des débits beaucoup plus élevés.

Au surplus, cette solution connue n'est pas satisfaisante car elle oblige à prévoir plusieurs échangeurs de chaleur, contribuant ainsi à l'encombrement du compartiment moteur.

On connaît, par ailleurs, d'après le brevet US N° 4 535 729, un échangeur de chaleur propre à alimenter en parallèle deux circuits de refroidissement, l'un destiné au refroidissement du moteur et l'autre destiné au refroidissement de l'huile. Pour ce faire, l'échangeur comprend une boîte à fluide alimentée par le fluide caloporteur et alimentant deux nappes de tubes d'échange de chaleur, lesquelles nappes étant formées d'une même rangée frontale de tubes qui débouchent respectivement dans deux chambres ménagées longitudinalement dans une seconde boîte à eau. Ces deux chambres, séparées par une cloison longitudinale, alimentent respectivement le circuit de refroidissement du moteur et le circuit de refroidissement d'huile.

Il est connu également par DE-A-2 423 440 un échangeur de chaleur propre à alimenter en parallèle deux circuits de refroidissement.

Cet échangeur comprend deux boîtes à fluide supérieures alimentées chacune par le fluide caloporteur et alimentant deux nappes de tubes d'échange de chaleur qui débouchent respectivement dans deux boîtes à fluide inférieures alimentant respectivement le circuit de refroidissement du moteur et le circuit de refroidissement d'huile.

Ce dispositif, comme celui du document US-A-4 535 729, n'est pas satisfaisant car les deux nappes n'ont pas le même coefficient de refroidissement du fait que l'air de refroidissement traverse successivement une première nappe et une seconde nappe. La seconde nappe est alors refroidie par de l'air qui a été déjà réchauffé par échange thermique avec la première nappe. De plus ce dispositif ne peut pas être utilisé dans le cas où le radiateur ne comporte qu'une seule rangée de tubes.

Dans le document DE-A-3 317 983, il est décrit un dispositif d'échangeur de chaleur utilisant un même fluide caloporteur comprenant une première boîte à fluide propre à être alimentée par le fluide caloporteur et divisée en plusieurs compartiments pour alimenter deux sous-faisceaux de tubes, les deux sous-faisceaux étant montés à une extrémité sur la première boîte à fluide et à une autre extrémité sur une seconde boîte à fluide divisée en plusieurs compartiments en communication avec les sous-faisceaux.

Ce dispositif d'échangeur de chaleur présente l'avantage que ses sous-faisceaux présentent, tous, le même coefficient de refroidissement du fait qu'ils sont tous traversés par de l'air à la même température.

Ce dispositif connu présente l'inconvénient néanmoins de ne pouvoir disposer que de deux sous-faisceaux identiques indépendants et alimentés conjointement de manière symétrique par la tubulure d'arrivée de fluide caloporteur. Ces sous-faisceaux fonctionnent de manière indépendant l'un de l'autre.

Il en résulte que ce dispositif d'échangeur de chaleur, contrairement à celui décrit dans le document US-A-4,535,729 n'est pas, par l'intermédiaire de ses sous-faisceaux de tubes, susceptible d'être raccordé à au moins deux circuits de refroidissement, l'un principal, dans lequel le débit du fluide caloporteur est plus élevé et l'autre, secondaire, ayant un débit plus faible.

Dans le document FR-A-1 011 031, la première et la seconde boîtes à fluide sont cloisonnées de manière à former, d'une part, des compartiments secondaires latéraux dans lesquels débouchent des tubulures de circulation du fluide caloporteur et, d'autre part, un compartiment principal central plus important dans lequel débouchent respectivement une tubulure d'entrée et de sortie.

Le faisceau de tubes est divisé, d'une part, en deux sous-faisceaux secondaires communiquant chacun uniquement avec un compartiment secondaire de la première boîte à fluide et le compartiment secondaire en regard de la seconde boîte à fluide et, d'autre part, en un sous-faisceau principal ou faisceau normal établissant une communication entre les compartiments principaux de la première et de la seconde boîtes à fluide.

En outre, les compartiments secondaires de la première boîte à fluide sont mis en communication chacun avec le compartiment central de ladite boîte par un tube permettant l'évacuation de l'air des compartiments secondaires, ainsi que d'alimenter la partie centrale de l'échangeur de chaleur, comportant le sous-faisceau principal, en eau chaude pour éviter le gel de celle-ci avant l'ouverture du thermostat, que comporte le circuit de refroidissement du moteur du véhicule dans lequel est monté le dispositif d'échangeur de chaleur.

Ainsi deux tubes supplémentaires débouchent dans le compartiment principal de la première boîte à fluide et ledit dispositif comporte six tubulures d'entrée et de sortie.
Une boîte, située à la sortie de la pompe à eau du véhicule et comprenant trois dérivations, permet d'alimenter les trois compartiments de la première boîte à fluide, tandis que les trois compartiments de la seconde boîte à fluide sont branchés sur la même canalisation du retour du circuit de refroidissement du moteur du véhicule.

Ce dispositif d'échangeur de chaleur, bien adapté à un seul circuit de refroidissement, présente donc l'inconvénient de ne pas permettre d'ajuster en son sein le débit du fluide caloporteur à travers différents circuits de refroidissement.

C'est, en conséquence, un but de l'invention de procurer un dispositif d'échangeur de chaleur pour au moins un circuit de refroidissement principal et un circuit de refroidissement secondaire qui permet d'éviter les inconvénients des dispositifs connus.

C'est encore un but de l'invention de procurer un tel dispositif qui permet d'ajuster le débit du fluide caloporteur à travers les différents circuits de refroidissement, tout en ayant le même coefficient de refroidissement pour ses sous-faisceaux de tubes et en pouvant fonctionner avec une seule rangée de tubes si désiré.

L'invention concerne plus particulièrement un dispositif d'échangeur de chaleur pour plusieurs circuits de refroidissement utilisant un même fluide caloporteur.

Selon l'invention le dispositif d'échangeur de chaleur pour plusieurs circuits de refroidissement utilisant un même fluide caloporteur comprenant une première boîte à fluide propre à être alimentée par le fluide caloporteur pour alimenter au moins deux sous-faisceaux de tubes faisant partie d'un même faisceau de tubes d'échangeur de chaleur, le faisceau étant monté à une extrémité sur la première boîte à fluide et à une autre extrémité sur une seconde boîte à fluide divisée en plusieurs compartiments en communication avec lesdits sous-faisceaux, dans lequel la première boîte à fluide comprend un compartiment principal dans lequel débouche une seule tubulure d'entrée propre à être reliée à une source de fluide caloporteur, tandis que la seconde boîte à fluide comprend un compartiment principal dans lequel débouche une tubulure de sortie principale propre à être reliée à un circuit de refroidissement principal, et au moins un compartiment secondaire séparé du compartiment principal par une cloison, le compartiment principal de la seconde boîte à fluide communiquant avec le compartiment principal de la première boîte à fluide avec un nombre plus important de tubes du faisceau que le compartiment secondaire de la seconde boîte à fluide, et dans lequel le faisceau de tubes comprend, d'une part, un sous-faisceau principal communiquant avec le compartiment principal de la première boîte à fluide et le compartiment principal de la seconde boîte à fluide et, d'autre part, au moins un sous-faisceau secondaire ayant un nombre de tubes inférieur à celui du sous-faisceau principal et communiquant avec la première boîte à fluide et au moins un compartiment secondaire de la seconde boîte à fluide, au moins une tubulure de sortie secondaire débouchant dans un compartiment secondaire d'une boîte à fluide pour le raccordement à un circuit de refroidissement secondaire, caractérisé en ce que la première boîte à fluide est divisée en plusieurs compartiments, à savoir ledit compartiment principal et au moins un compartiment secondaire séparé dudit compartiment principal par une cloison, en ce que le sous-faisceau secondaire communique avec ledit compartiment secondaire de la prèmière boîte à fluide, en ce que les cloisons des boîtes à fluide s'étendent transversalement par rapport à la direction longitudinale desdites boîtes, laquelle est perpendiculaire à la direction des tubes du faisceau, et en ce que ledit compartiment secondaire de la seconde boîte à fluide est dépourvu de ladite tubulure de sortie secondaire et communique par au moins un tube du sous-faisceau secondaire avec le compartiment principal de la première boîte à fluide ou avec un compartiment secondaire supplémentaire de la première boîte à fluide pourvu d'une cloison dotée d'un orifice calibré, qui sépare ledit compartiment secondaire supplémentaire du compartiment principal de la première boîte à fluide, en sorte que le fluide caloporteur est propre à circuler à partir de la tubulure d'entrée, d'une part, dans un seul sens dans le sous-faisceau principal jusqu'à la tubulure de sortie principale et, d'autre part, en sens alterné dans le sous-faisceau secondaire jusqu'à la tubulure de sortie secondaire débouchant ainsi dans le compartiment secondaire de la première boîte à fluide ou dans un compartiment secondaire supplémentaire de la seconde boîte à fluide.

On obtient ainsi un dispositif d'échangeur de chaleur utilisant un seul faisceau de tubes pour plusieurs circuits de refroidissement utilisant un même fluide calopoteur et cet agencement permet de disposer, à l'intérieur d'une boite à fluide, de plusieurs compartiments successifs suivant la direction longitudinale de la boite à eau. Ainsi, on obtient des sous-faisceaux présentant tous le même coefficient de refroidissement et permettant une circulation du fluide en plusieurs passes, en sens alterné, au sein d'un même sous-faisceau.

Ainsi, grâce notamment à la conformation de la première boîte à fluide et à l'orientation des cloisons on peut obtenir le même coefficient de refroidissement pour les sous-faisceaux.

On appréciera, du fait de la liaison d'au moins un tube du sous-faisceau secondaire avec le compartiment principal de la première boîte à fluide, que la plus grande partie du débit s'écoule par la tubulure de sortie principale, tandis qu'une faible partie du débit s'écoule par la tubulure de sortie secondaire, et que l'on peut obtenir une température de fluide plus basse en aval de la tubulure de sortie secondaire qu'en aval de la tubulure de sortie principale car le fluide qui pénètre dans le compartiment secondaire de la seconde boîte à fluide est déjà refroidi, puis est refroidi au moins une seconde fois lors de sa circulation entre les compartiments secondaires des deux boîtes à fluide.

Ce dispositif d'échangeur de chaleur peut ne présenter, si désiré, qu'une seule rangée de tubes.

L'invention s'applique notamment à un dispositif comprenant un sous-faisceau principal, destiné par exemple au refroidissement d'un moteur d'un véhicule automobile, et un sous-faisceau secondaire, destiné par exemple au refroidissement de l'huile de lubrification et/ou de boîte de vitesse.

Elle s'applique aussi à un dispositif comprenant un sous-faisceau principal, destiné par exemple au refroidissement d'un moteur d'un véhicule automobile et deux sous-faisceaux secondaires, destinés respectivement au refroidissement de l'huile et au refroidissement de l'air de suralimentation.

Dans le cas où le dispositif comprend un sous-faisceau principal et deux sous-faisceaux secondaires, ces deux sous-faisceaux peuvent être disposés d'un même côté du sous-faisceau principal ou, en variante, de part et d'autre de ce sous-faisceau principal.

Dans une autre forme de réalisation de l'invention, la première boîte à fluide comprend une tubulure d'entrée principale débouchant dans le compartiment principal et propre à alimenter le sous-faisceau principal et un sous-faisceau secondaire et une tubulure d'entrée secondaire débouchant dans un autre compartiment secondaire propre à alimenter directement un autre sous-faisceau secondaire.

Dans la description qui suit, on se réfère aux dessins annexés, sur lesquels :
- la figure 1 est une vue en coupe schématique d'un dispositif d'échangeur de chaleur comprenant deux sous-faisceaux ;
- la figure 2 est une vue partielle du dispositif de la figure 1 dans une variante de réalisation ;
- la figure 3 est une vue en coupe longitudinale d'un dispositif d'échangeur de chaleur comportant trois sous-faisceaux ;
- la figure 4 est une vue en coupe longitudinale d'un autre dispositif comportant trois sous-faisceaux ;
- la figure 5 est une vue en coupe longitudinale d'un autre dispositif comportant trois sous-faisceaux ;
- la figure 6 montre, schématiquement, un système de refroidissement comportant trois circuits de refroidissement alimentés par le dispositif de la figure 3 ;
- la figure 7 est une vue en coupe longitudinale d'un dispositif d'échangeur de chaleur comportant trois sous-faisceaux et deux tubulures d'entrée ; et
- la figure 8 illustre, schématiquement, un système de refroidissement comportant trois circuits de refroidissement alimentés par le dispositif représenté à la figure 7.

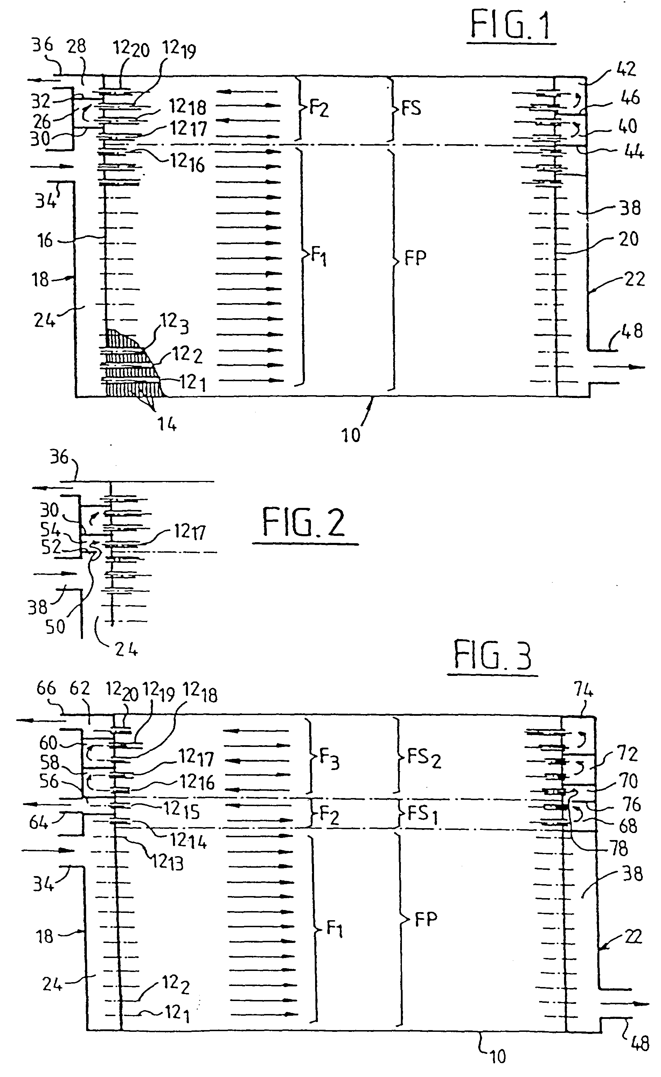

On se réfère tout d'abord à la figure 1 qui montre un échangeur de chaleur comprenant un faisceau 10 constitué d'une multiplicité de tubes 12 (dans l'exemple 20 tubes désignés par les références 12-1 à 12-20) s'étendant parallèlement entre eux et traversant perpendiculairement une multiplicité d'ailettes 14 parallèles entre elles. Pour la clarté du dessin, on a représenté seulement une partie des tubes 12 et des ailettes 14. Les tubes 12 sont reliés, à une extrémité, au collecteur 16 d'une première boîte à fluide 18 et, à leur autre extrémité, au collecteur 20 d'une seconde boîte à fluide 22. La boite à fluide 18 est divisée en plusieurs compartiments : un compartiment principal 24 et deux compartiments secondaires 26 et 28 et cela grâce à deux cloisons transversales 30 et 32. La boîte à fluide 18 est en outre munie d'une tubulure d'entrée principale 34 débouchant dans le compartiment 24 et propre à alimenter ce dernier en fluide caloporteur, ainsi que d'une tubulure de sortie 36 propre à alimenter un circuit de refroidissement secondaire, par exemple un circuit de refroidissement d'huile.

La boîte à fluide 22 est divisée en plusieurs compartiments : un compartiment principal 38 et deux compartiments secondaires 40 et 42 et cela par l'intermédiaire de deux cloisons 44 et 46. En outre, la boîte à fluide 22 est munie d'une tubulure de sortie principale 48 débouchant dans le compartiment 38 et propre à alimenter un circuit de refroidissement principal, par exemple le circuit de refroidissement d'un moteur à combustion interne.

Les cloisons internes 30 et 32 de la boîte à fluide 18 et les cloisons internes 44 et 46 de la boîte à fluide 22 s'étendent transversalement par rapport à la direction longitudinale desdites boites, laquelle direction longitudinale est elle-même perpendiculaire à la direction des tubes du faisceau.

Le faisceau 10 comprend un sous-faisceau principal FP dans l'exemple formé à partir de 16 tubes (tubes 12-1 à 12-16) du faisceau et un sous-faisceau secondaire FS, dans l'exemple formé à partir de 4 tubes du faisceau (tubes 12-17 à 12-20), les sous-faisceaux respectifs étant formés à chaque fois d'une portion longitudinale de la rangée frontale des tubes s'étendant tout au long de l'échangeur de chaleur.

L'ensemble des tubes constituant le sous-faisceau principal FP communique, à une extrémité, dans le compartiment 24 de la boite à fluide 18 et, à leur autre extrémité, dans le compartiment 38 de la boîte à fluide 22.

Le fluide caloporteur introduit dans le compartiment 24 s'écoule ainsi à travers l'ensemble des tubes du sous-faisceau principal FP pour gagner le compartiment 38 de la boîte à fluide 22, la circulation du fluide caloporteur dans ce sous-faisceau s'effectuant en une seule passe, suivant la direction des flèches F1.
Selon une caractéristique de l'invention le sous-faisceau secondaire FS est alimenté en fluide caloporteur par l'intermédiaire d'au moins un des tubes du sous-faisceau FS, ici un seul, à savoir le tube 12-17 dont une extrémité débouche dans le compartiment 24 de la boîte à fluide 18 et dont l'autre extremité débouche dans le compartiment 40 de la boîte à fluide 22 dépourvu de tubulure. Le fluide caloporteur circule dans le sous-faisceau FS de la façon suivante : le fluide gagne le compartiment 40 par le tube 12-17, ensuite le compartiment 26 par le tube 12-18, ensuite le compartiment 42 par le tube 12-19 et, enfin, le compartiment 28 par le tube 12-20 et quitte l'échangeur par la tubulure 36. Ainsi, le fluide caloporteur circule dans le sous-faisceau FS en plusieurs passes, en sens alterné, dans l'exemple en 4 passes comme montré par les flèches F2 et en une seule passe, dans un sens, dans le sous faisceau principal FP de manière précitée. Avec l'échangeur de la figure 1, la plus grande partie du débit du fluide caloporteur s'écoule par la tubulure de sortie principale 48, tandis qu'une faible partie du débit s'écoule par la tubulure de sortie secondaire 36, ce qui permet d'obtenir une température de fluide plus basse en aval de la tubulure 36 qu'en aval de la tubulure 48. A titre d'exemple, pour une température du fluide caloporteur d'environ 100°C, arrivant par la tubulure d'entrée 34, la température du fluide s'échappant par la tubulure 48 est de l'ordre de 95°C, tandis que la température du fluide s'échappant par la tubulure 36 est de l'ordre de 60°C. Le dispositif de la figure 1 peut être ainsi utilisé pour le refroidissement d'un moteur de véhicule automobile au moyen du débit de fluide s'échappant par la tubulure 48 et le refroidissement de l'huile du moteur et/ou de la boîte de vitesse, grâce au débit de fluide s'échappant par la tubulure 36.

On se réfère maintenant à la figure 2 qui montre une variante de réalisation de l'échangeur de la figure 1. Dans cette variante, le fluide caloporteur alimente le tube 12-17 du sous-faisceau secondaire FS par l'intermédiaire d'un orifice calibré 50 ménagé dans une cloison interne 52 formant ainsi un compartiment secondaire supplémentaire 54 limité d'autre part par la cloison 30. On peut ainsi régler précisément la fraction du débit du fluide caloporteur qui pénètre dans le compartiment 54 et alimente ainsi le tube 12-17 et, par conséquent, l'ensemble du sous-faisceau FS.

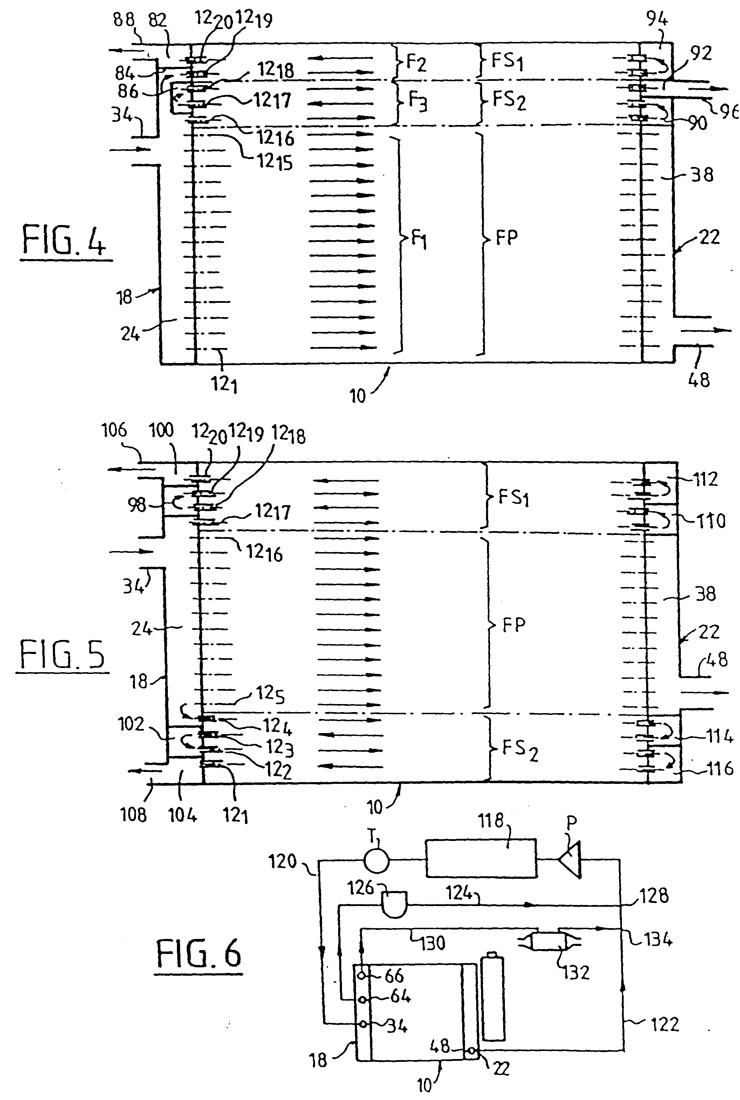

On se réfère maintenant à la figure 3 qui montre un autre échangeur de chaleur destiné à l'alimentation de trois circuits de refroidissement.

La boîte à fluide 18 ccmprend ici un compartiment principal 24 et quatre compartiments secondaires 56,58,60 et 62 séparés entre eux par quatre cloisons transversales (non référencées sur le dessin). La boîte à fluide 18 comprend une tubulure d'entrée principale 34 débouchant dans le compartiment 24 et deux tubulures de sortie secondaire 64 et 66 communiquant respectivement avec les compartiments 56 et 62.

La boîte à fluide 22 comprend un compartiment principal 38 et quatre compartiments secondaires 68,70,72 et 74 séparés entre eux par quatre cloisons transversales (non désignées -sur le dessin). La boîte à fluide 22 comprend une tubulure de sortie principale 48 qui communique avec le compartiment principal 38. Le faisceau 10 comprend un sous-faisceau principal FP constitué, dans l'exemple, par 13 tubes 12-1 à 12-13, un premier sous-faisceau secondaire FS1 constitué, dans l'exemple, de deux tubes 12-14 et 12-15 et d'un second sous-faisceau secondaire FS2 constitué, dans l'exemple, de cinq tubes 12-16 à 12-20. Par ailleurs, les compartiments 68 et 70 de la boîte à fluide 22 sont séparés par une cloison 76 munie d'un orifice calibré 78 faisant communiquer ces deux compartiments entre eux.

L'échangeur de la figure 3 fonctionne de la façon suivante. Le fluide caloporteur gagne le compartiment 24 de la boite à fluide 18. La plus grande partie du débit passe par les tubes 12-1 à 12-13 du sous-faisceau principal FP pour gagner le compartiment 38 et quitter l'échangeur par la tubulure 48. Une autre partie du fluide passe par le tube 12-14, gagne le compartiment 68 dépourvu de tubulure et gagne ensuite le compartiment 56 par le tube 12-15, une fraction du débit quittant ainsi l'échangeur par la tubulure 64. Une fraction du débit parvenant au compartiment 68 gagne le compartiment 70 par l'orifice calibré 78 et alimente ainsi le second sous-faisceau secondaire FS2. Le fluide gagne ainsi successivement le compartiment 58, le compartiment 72, le compartiment 60, le compartiment 74 et enfin le compartiment 62 pour quitter l'échangeur par la tubulure 66.

Dans le sous-faisceau principal FP, le fluide circule en une seule passe et toujours dans la même direction ou sens comme montré par les flèches F1. Dans le sous-faisceau FS1, le fluide circule en deux passes, en sens alterné, comme montré par les deux flèches F2 et, dans le sous-faisceau FS2, le fluide circule en cinq passes, en sens alterné, comme montré par les cinq flèches F3.

L'échangeur de la figure 3 peut être utilisé pour alimenter le circuit de refroidissement d'un moteur relié en aval de la tubulure 48, un circuit de refroidissement d'huile relié en aval de la tubulure 64 et un circuit de refroidissement d'air de suralimentation relié en aval de la tubulure 66.

On se réfère maintenant à la figure 4. Dans cette forme de réalisation, la boite à fluide 18 comprend un compartiment principal 24 et un compartiment secondaire 82, ces deux compartiments étant séparés par une cloison interne 84. En outre, à l'intérieur du compartiment 24 est définie une chambre 86 qui met en communication les tubes 12-17 et 12-18 tout en permettant au tube 12-19 d'être alimenté directement par le compartiment principal. La boite à fluide 18 comprend une tubulure d'entrée 34 débouchant dans le compartiment principal 24 et une tubulure de sortie 88 communiquant avec le compartiment 82. La boîte à fluide 22 comprend un compartiment principal 38 et trois compartiments secondaires 90,92 et 94, séparés entre eux par des cloisons internes transversales de la boîte à fluide. Le compartiment 38 débouche sur une tubulure de sortie principale 48 et le compartiment 92 débouche sur une tubulure de sortie secondaire 96.

Le faisceau 10 comprend ici un faisceau principal FP constitué par les tubes 12-1 à 12-15, un faisceau secondaire FS1 constitué par les tubes 12-19 et 12-20 et un faisceau secondaire FS2 constitué par les tubes 12-16 à 12-18. Le fluide caloporteur pénétrant dans le compartiment 24 alimente d'une part les quinze tubes du faisceau FP, d'autre part, le tube 12-16 du sous-faisceau FS2 et le tube 12-19 du sous-faisceau FS1.

Le fluide caloporteur circule en une seule passe dans les tubes FP, comme représenté par les flèches F1, en deux passes, en sens alterné, dans les tubes du sous-faisceau FS1 et en trois passes, en sens alterné, dans les tubes du sous-faisceau FS2. Ainsi, dans cette forme de réalisation, la boite à fluide 18 comprend deux tubulures de raccordement: les tubulures 34 et 88 et la boîte à fluide 22 comporte également deux tubulures de raccordement: des tubulures 48 et 96.

Dans la forme de réalisation de la figure 5, la boîte à fluide 18 comprend un compartiment principal 24 et, d'un côté, deux compartiments secondaires 98 et 100 et, de l'autre côté, deux compartiments secondaires 102 et 104. La boite à fluide 18 comprend trois tubulures de raccordement: une tubulure d'entrée principale 34 communiquant avec le compartiment 24 et deux tubulures de sortie secondaire 106 et 108 communiquant respectivement avec les compartiments 100 et 104. La boîte à fluide 22 comprend un compartiment principal 38 et, d'un côté, deux compartiments secondaires 110 et 112 et, de l'autre côté, deux compartiments secondaires 114 et 116. La boîte à fluide 22 comprend une seule tubulure de raccordement, à savoir une tubulure de sortie principale 48.

Le faisceau 10 comprend un sous-faisceau principal FP constitué par les tubes 12-5 à 12-16, un sous-faisceau secondaire FS1 constitué par les tubes 12-17 à 12-20 et un sous-faisceau secondaire FS2 constitué par les tubes 12-1 à 12-4. Le fluide caloporteur pénétrant dans le compartiment principal 24 de la boîte à fluide 18 alimente les tubes 12-5 à 12-16 du sous-faisceau FP, le tube 12-17 du sous-faisceau FS1 et le tube 12-4 du sous-faisceau FS2.

Le fluide traverse ainsi en une seule passe, comme montré par les flèches F1, les tubes du sous-faisceau FP pour gagner le compartiment 38 et la tubulure de sortie principale 48.

La fraction du fluide caloporteur qui pénètre dans le tube 12-17 traverse ensuite successivement les tubes 12-17 à 12-20 en quatre passes, en sens alterné, comme montré par les flèches F2, pour gagner le compartiment 100 et la tubulure 106. De façon similaire, la fraction du fluide alimentant le tube 12-4 traverse successivement les tubes 12-4, 12-3, 12-2 et 12-1 en quatre passes, en sens alterné, comme montré par les flèches F3 pour gagner le compartiment 104 et la tubulure 108.

Dans la forme de réalisation de la figure 5, les deux sous-faisceaux secondaires FS1 et FS2 sont situés de part et d'autre du sous-faisceau principal FP alors que, dans la forme de réalisation des figures 3 et 4, les sous-faisceaux FS1 et FS2 étaient situés tous deux du même côté du sous-faisceau principal FP.

La tubulure de sortie 106 peut être raccordée par exemple à un circuit de refroidissement d'huile et la tubulure de sortie 108 à un circuit de refroidissement d'air de suralimentation.

On se réfère maintenant à la figure 6 qui montre un système de refroidissement à trois circuits de refroidissement utilisant un échangeur de chaleur identique à l'échangeur représenté à la figure 3. Le fluide caloporteur quittant un moteur 118 gagne la tubulure d'entrée 34 de l'échangeur par une conduite 120 sur laquelle est monté un thermostat T. La plus grande partie du débit du fluide caloporteur quitte l'échangeur par la tubulure de sortie principale 48 qui est reliée à l'entrée du moteur par une conduite 122 sur laquelle est montée une pompe P propre à faire circuler le fluide dans le sens indiqué par les flèches. La tubulure de sortie 64 débouche sur une conduite 124 sur laquelle est monté un refroidisseur d'huile 126. Cette conduite 124 débouche en un point 128 sur la canalisation 122. La conduite de sortie 66 alimente une conduite 130 sur laquelle est monté un refroidisseur d'air de suralimentation 132. Cette conduite 130 débouche en un point 134 sur la conduite 122. Ainsi, l'échangeur de chaleur permet de refroidir en parallèle le moteur du véhicule, l'huile de lubrification et/ou de la boîte de vitesse du véhicule et, enfin, l'air de suralimentation provenant d'un turbo-compresseur.

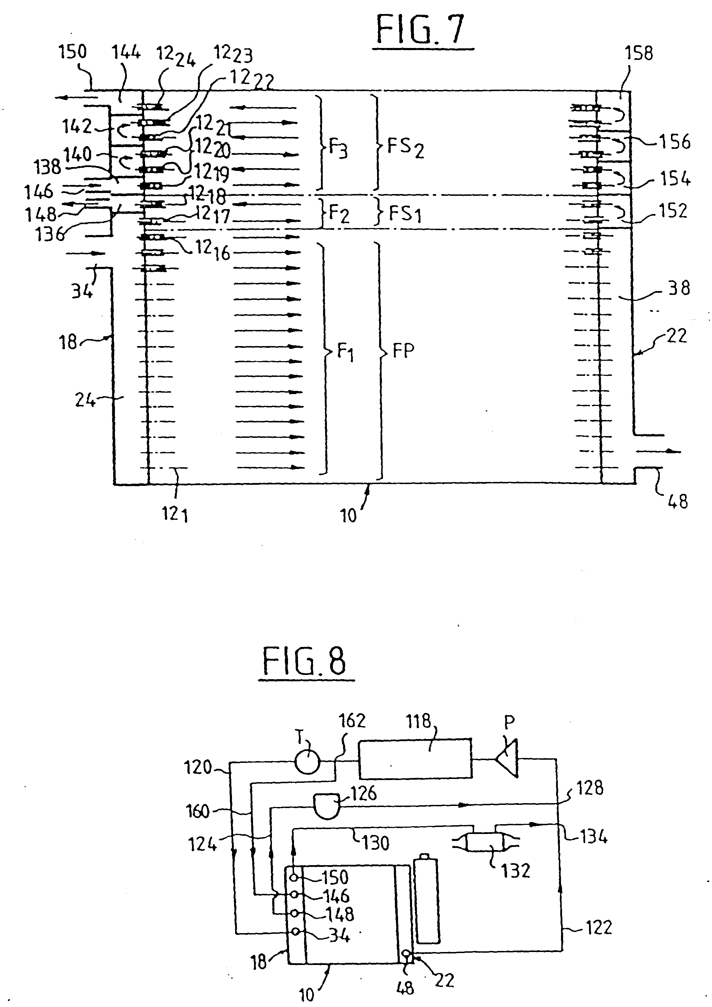

On se réfère maintenant à la figure 7 montrant un échangeur de chaleur pour trois circuits de refroidissement, conformément à une autre variante. La boîte à fluide 18 comprend un compartiment principal 24 et cinq compartiments secondaires 136,138,140,142 et 144 séparés entre eux par des cloisons transversales à l'intérieur de la boîte à fluide. Cette dernière comprend quatre tubulures de raccordement : une tubulure d'entrée principale 34 communiquant avec le compartiment 24, une tubulure d'entrée secondaire 146 communiquant avec le compartiment 138 et deux tubulures de sortie secondaire 148 et 150 communiquant respectivement avec les compartiments 136 et 144.

La boîte à fluide 22 comprend un compartiment principal 38 et quatre compartiments secondaires 152,154,156 et 158, séparés entre eux par des cloisons internes transversales de la boîte à fluide. Cette dernière comprend une seule tubulure de raccordement: une tubulure de sortie principale 48 communiquant avec le compartiment 38.

Le faisceau de tubes 10 comprend, dans l'exemple, 24 tubes: les tubes 12-1 à 12-16 constituent le sous-faisceau principal FP, les tubes 12-17 et 12-18 le sous-faisceau secondaire FS1 et les tubes 12-19 à 12-24 le sous-faisceau secondaire FS2. Dans les tubes 12-1 à 12-16, le fluide circule en une seule passe du compartiment 24 au compartiment 38 et, de là, gagne la tubulure de sortie 48. Une fraction du débit du fluide caloporteur quitte le compartiment 24 par le tube 12-17, le fluide gagnant ainsi le compartiment 152 et, ensuite, par le tube 12-18, le compartiment 136 et la tubulure de sortie 148. Dans le sous-faisceau FS1, la circulation du fluide s'effectue en deux passes, en sens alterné, comme montré par la flèche F2.

Une partie du fluide caloporteur pénètre, par la tubulure d'entrée 146, dans le compartiment 138. De là, le fluide gagne le compartiment 154 par le tube 12-19. Le fluide circule ensuite successivement à travers les tubes 12-20 à 12-24 pour gagner le compartiment 144 et la tubulure de sortie 150. Dans le sous-faisceau FS2, la circulation s'effectue en six passes, en sens alterné, comme montré par les flèches F3.

On se réfère maintenant à la figure 8 qui montre un système de refroidissement dérivé du système représenté à la figure 6, ce système utilisant un échangeur identique à celui de la figure 7. Les parties communes aux systèmes des figures 6 et 8 sont désignées par les mêmes références numériques. Comme dans le cas de la figure 6, le fluide caloporteur quitte le moteur 118 par une conduite 120 pour alimenter l'échangeur de chaleur par une tubulure d'entrée principale 34. La majeure partie du débit du fluide quitte cet échangeur par une tubulure de sortie 48 qui est reliée à l'entrée du moteur 118 par une conduite 122.

Les tubulures de sortie secondaire 148 et 150 de l'échangeur sont raccordées respectivement aux conduites 124 et 130 pour alimenter respectivement le refroidisseur d'huile 126 et le refroidisseur d'air de suralimentation 132.

Dans le cas particulier de la figure 8, il est prévu en outre une conduite de dérivation 160 qui est reliée, d'une part, en un point 162 de la conduite 120 situé entre la sortie moteur et le thermostat T et, d'autre part, à la tubulure d'entrée secondaire 146. Le thermostat T ferme l'accès à la conduite d'entrée principale 34 en-dessous d'une température déterminée et ouvre cet accès au-dessus de cette température déterminée. En revanche, la tubulure d'entrée secondaire 146 est en permanence alimentée par le fluide caloporteur provenant du moteur.

Ainsi, tant que la température du fluide caloporteur est inférieure à la température de consigne du thermostat, seule la tubulure d'entrée secondaire 146 est alimentée. Par conséquent, seul le faisceau secondaire FS2 fonctionne et assure ainsi le refroidissement de l'air de suralimentation. Lorsque la température du fluide caloporteur dépasse la température de consigne du thermostat, le fluide caloporteur alimente alors simultanément les tubulures d'entrée 34 et 146, si bien que les trois sous-faisceaux FP,FS1 et FS2 sont alimentés en parallèle pour assurer respectivement le refroidissement du moteur, le refroidissement de l'huile et le refroidissement de l'air de suralimentation.

Dans les différentes formes de réalisation représentées aux figures, les sous-faisceaux formant le faisceau de l'échangeur de chaleur présentent, tous, le même coefficient de refroidissement du fait qu'ils sont tous traversés par de l'air à la même température. On conserve cet avantage que le faisceau soit formé d'une seule nappe de tubes, comme représenté aux figures, ou de plusieurs nappes de tubes, comme cela peut être envisagé.

On peut modifier le nombre des tubes constituant les différents sous-faisceaux et ajuster les débits correspondants, de manière à obtenir les caractéristiques de refroidissement souhaité en fonction du circuit de refroidissement appliqué.

## Revendications

1. Dispositif d'échangeur de chaleur pour plusieurs circuits de refroidissement utilisant un même fluide caloporteur comprenant une première boîte à fluide (18) propre à être alimentée par le fluide caloporteur pour alimenter au moins deux sous-faisceaux de tubes (FP,FS-FS1,FS2) faisant partie d'un même faisceau (10) de tubes (12) d'échangeur de chaleur, le faisceau (10) étant monté à une extrémité sur la première boîte à fluide (18) et à une autre extrémité sur une seconde boîte à fluide (22) divisée en plusieurs compartiments (38,40,42) en communication avec lesdits sous-faisceaux, dans lequel la première boîte à fluide (18) comprend un compartiment principal (24) dans lequel débouche une seule tubulure d'entrée (34) propre à être reliée à une source de fluide caloporteur, tandis que la seconde boîte à fluide (22) comprend un compartiment principal (38), dans lequel débouche une tubulure de sortie principale (48) propre à être reliée à un circuit de refroidissement principal, et au moins un compartiment secondaire (40,42) séparé du compartiment principal par une cloison (44,46), le compartiment principal (38) de la seconde boîte à fluide (22) communiquant avec le compartiment principal (24) de la première boîte à fluide (18) avec un nombre plus important de tubes (12) du faisceau (10) que le compartiment secondaire (40) de la seconde boîte à fluide (22), et dans lequel le faisceau (10) de tubes (12) comprend, d'une part, un sous-faisceau principal (FP) communiquant avec le compartiment principal (24) de la première boîte à fluide (18) et le compartiment principal (38) de la seconde boîte à fluide (22) et, d'autre part, au moins un sous-faisceau secondaire (FS-FS1-FS2) ayant un nombre de tubes (12) inférieur à celui du sous-faisceau principal (FP) et communiquant avec la première boîte à fluide et au moins un compartiment secondaire (40,42) de la seconde boîte à fluide (22), au moins une tubulure de sortie secondaire (36) débouchant dans un compartiment secondaire d'une boîte (18,22) à fluide pour le raccordement à un circuit de refroidissement secondaire, caractérisé en ce que la première boîte à fluide (18) est divisée en plusieurs compartiments (24,26,28), à savoir ledit compartiment principal (24) et au moins un compartiment secondaire (26,28) séparé dudit compartiment principal (24) par une cloison (30,32), en ce que le sous-faisceau secondaire (FS-FS1-FS2) communique avec ledit compartiment secondaire (26,28) de la première boîte à fluide (18), en ce que les cloisons (30,32,44,46) des boîtes à fluide (18,22) s'étendent transversalement par rapport à la direction longitudinale desdites boîtes (18,22), laquelle est perpendiculaire à la direction des tubes (12) du faisceau (10), et en ce que ledit compartiment secondaire (40) de la seconde boîte à fluide (22) est dépourvu de ladite tubulure de sortie secondaire (36) et communique par au moins un tube du sous-faisceau secondaire (FS) avec le compartiment principal (24) de la première boîte à fluide (18) ou avec un compartiment secondaire supplémentaire (54) de la première boîte à fluide (18) pourvu d'une cloison (52) dotée d'un orifice calibré (50), qui sépare ledit compartiment secondaire supplémentaire (54) du compartiment principal (24) de la première boîte à fluide (18), en sorte que le fluide caloporteur est propre à circuler à partir de la tubulure d'entrée (34), d'une part, dans un seul sens dans le sous-faisceau principal (FP) jusqu'à la tubulure de sortie principale (48) et, d'autre part, en sens alterné dans le sous-faisceau secondaire (FS) jusqu'à la tubulure de sortie secondaire (36) débouchant ainsi dans le compartiment secondaire (26,28) de la première boîte à fluide (18) ou dans un compartiment secondaire supplémentaire (92) de la seconde boîte à fluide (22).

2. Dispositif selon la revendication 1, caractérisé en ce que le sous-faisceau principal (FP) est destiné par exemple au refroidissement d'un moteur d'un véhicule automobile et le sous-faisceau secondaire (FS) est destiné par exemple au refroidissement de l'huile.

3. Dispositif selon la revendication 1 ou 2, caractérisé en ce que le faisceau (10) comprend un sous-faisceau principal (FP) et deux sous-faisceaux (FS1,FS2).

4. Dispositif selon la revendication 3, caractérisé en ce que la première boîte à fluide (18) comprend une tubulure d'entrée principale (34) débouchant dans le compartiment principal (24) et propre à alimenter le sous-faisceau principal (FP) et l'un des sous-faisceaux secondaires (FS1), et une tubulure d'entrée secondaire (146) débouchant dans un compartiment secondaire (138) alimentant directement l'autre sous-faisceau secondaire (FS2).

## Patentansprüche

1. Wärmetauschervorrichtung für mehrere Kühlkreieläufe unter Verwendung eines gleichen Wärmeträgermediums mit einem ersten Wasserkasten (18), dem das Wärmeträgermedium zugeleitet werden kann, um wenigstens zwei Rohrteilbündel (FP, FS-FS1, FS2) zu speisen, die zu ein und demselben Rohrbündel (10) mit Wärmetauscherrohren (12) gehören, wobei das Rohrbündel (10) an einem Ende mit dem ersten Wasserkasten (18) und an einem anderen Ende mit einem zweiten Wasserkasten (22) verbunden ist, der in mehrere Abteilungen (38, 40, 42) unterteilt ist, die mit den besagten Teilbündeln in Verbindung stehen, wobei der erste Wasserkasten (18) eine Hauptabteilung (24) enthält, in welche ein einziger Einlaufstutzen (34) mündet, der an eine Quelle für das Wärmeträgermedium angeschlossen werden Kann, während der zweite Wasserkasten (22) eine Hauptabteilung (38), in die ein Haupteinlaufstutzen (48) mündet, der an einen Hauptkühlkreislaur angeschlossen werden kann, und wenigstens eine Sekundbrabteilung (40, 42) enthält, die von der Hauptabteilung durch eine Trennwand (44, 46) getrennt ist, wobei die Hauptabteilung (38) des zweiten Wasserkastens (22) mit der Hauptabteilung (24) des ersten Wasserkastens (18) mit einer größeren Anzahl von Rohren (12) des Rohrbündels (10) als bei der sekundärabteilung (40) des zweiten Wasserkastens (22) in Verbindung steht und wobei das Bündel (10) von Rohren (12) einerseits ein Hauptteilbündel (FP) enthält, das mit der Hauptabteilung (24) des ersten Wasserkastens (18) und der Hauptabteilung (38) des zweiten Wasserkastens (22) in Verbindung steht, und andererseits wenigstens ein Sekundärteilbündel (FS-FS1-FS2), dessen Anzahl von Rohren (12) kleiner als die des Hauptteilbündels (FP) *ist* und das mit dem ersten Wasserkasten und wenigstens mit einer Sekundärabteilung (40, 42) des zweiten Wasserkastens (22) in Verbindung steht, wobei wenigstens ein Sekundärauslaufstutzen (36) in eine Sekundärabteilung eines Wasserkastens (18, 22) für den Anschluß an einen Sekundärkühlkreislauf mündet , **dadurch gekennzeichnet**, daß der erste Wasserkasten (18) in mehrere Abteilungen (24, 26, 28) unterteilt ist, und zwar in die besagte Hauptabteilung (24) und wenigstens eine Sekundärabteilung (26, 28), die von der besagten Hauptabteilung (24) durch eine Trennwand (30, 32) getrennt ist, daß das SekundärteilbÜndel (FS-FS1-FS2) mit der besagten Sekundärabteilung (26, 28) des ersten Wasserkastens (18) in Verbindung steht, daß die Trennwände (30, 32, 44, 46) der Wasserkästen (18, 22) quer im Verhältnis zur Längsrichtung der besagten Wasserkästen (18, 22) verlaufen, die ihrerseits senkrecht zur Richtung der Rohre (12) des Rohrbündels (10) verläuft, und daß die besagte Sekundärabteilung (40) des zweiten Wasserkastens (22) nicht mit dem besagten Sekundärauslaufstutzen (36) versehen ist und über wenigstens ein Rohr des Sekundärteilbündels (FS) mit der Hauptabteilung (24) des ersten Wasserkastens (18) oder mit einer zusätzlichen Sekundärabteilung (54) des ersten Wasserkastens (18) in Verbindung steht, der mit einer Trennwand (52) mit einer kalibrierten Öffnung (50) versehen ist, welche die besagte zusätzliche Sekundärabteilung (54) von der Hauptabteilung (24) des ersten Wasserkastens (18) trennt, so daß das Wärmeträgermedium vom Einlaufstutzen (38) aus einerseits in einer einzigen Richtung im Hauptteilbündel (FP) bis zu dem Hauptauslaufstutzen (48) und andererseits in wechselnder Richtung im Sekundärteilbündel (FS) bis zum Sekundärauslaufstutzen (36) zirkulieren kann, der so in die Sekundärabteilung (26, 28) des ersten Wasserkastens (18) oder in eine zusätzliche Sekundärabteilung (92) des zweiten Wasserkastens (22) mündet.

2. Vorrichtung nach Anspruch 1 , **dadurch gekennzeichnet**, daß das Hauptteilbündel (FP) beispielsweise für die kühlung eines Motors eines Kraftfahrzeugs bestimmt ist und das Sekundärteilbündel (FS) beispielsweise für die Kühlung des Öls bestimmt ist.

3. Vorrichtung nach Anspruch 1 oder 2 , **dadurch gekennzeichnet**, daß das Rohrbündel (10) ein Hauptteilbündel (FS) und zwei Sekundärteilbündel (FS1, FS2) enthält.

4. Vorrichtung nach Anspruch 3 , **dadurch gekennzeichnet**, daß der erste Wasserkasten (18) einen Haupteinlaufatutzen (34), der in die Hauptabteilung (24) mündet und das Hauptteilbündel (FP) sowie eines der Sekundärteilbündel (FS1) speisen kann, und einen Sekundäreinlaufstutzten (146) enthält, der in die Sekundärabteilung (138) mündet und das andere Sekundärteilbündel direkt speist.

## Claims

1. A heat exchanger apparatus for multiple cooling circuits using a common heat transfer fluid, comprising a first fluid header (18) arranged to be fed with the heat transfer fluid for feeding at least two sub-bundles of tubes (FP, FS-FS1, FS2) which form part of a common bundle (10) of heat exchanger tubes (12), the bundle (10) being mounted at one end on a first fluid header (18) and at the other end on a second fluid header (22) which is divided into a plurality of compartments (38, 40, 42) in communication with the said sub-bundles, in which the first fluid header (18) comprises a main compartment (24) into which a single feed tube (34) opens, the latter being adapted to be connected to a source of heat transfer fluid, while the second fluid header (22) comprises a main compartment (38) into which a main outlet tube (48) opens, the latter being adapted to be connected to a main cooling circuit, and at least one secondary compartment (40, 42) separated from the main compartment by a bulkhead (44, 46), the main compartment (38) of the second fluid header (22) being in communication with the main compartment (24) of the first fluid header (18) with a larger number of tubes (12) of the bundle (10) than the secondary compartment (40) of the second fluid header (22), and in which the bundle (10) of tubes (12) comprises, firstly, a main sub-bundle (FP) communicating with the main compartment (24) of the first fluid header (18) and the main compartment (38) of the second fluid header (22), and, secondly, at least one secondary sub-bundle (FS-FS1-FS2) having fewer tubes (12) than the main sub-bundle (FP) and being inn communication with the first fluid header and at least one secondary compartment (40, 42) of the second fluid header (22), with at least one secondary outlet tube (36) being open into a secondary compartment of a fluid header (18, 22) so as to connect it to a secondary cooling circuit, characterised in that the first fluid header (18) is divided into a plurality of compartments (24, 26, 28), namely the said main compartment (24) and at least one secondary compartment (26, 28) separated from the said main compartment (24) by a bulkhead (30, 32), in that the secondary sub-bundle (FS-FS1-FS2) is in communication with the said secondary compartment (26, 28) of the first fluid header (18), in that the bulkheads (30, 32, 44, 46) of the fluid headers (18, 22) extend transversely with respect to the longitudinal direction of the said headers (18, 22), which is perpendicular to the direction of the tubes (12) of the bundle (10), and in that the said secondary outlet tube (36) is absent from the said secondary compartment (40) of the second fluid header (22), which is in communication, through at least one tube in the secondary sub-bundle (FS), with the main compartment (24) of the first fluid header (18) or with a supplementary secondary compartment (54) of the first fluid header (18), which has a baffle (52) having a calibrated orifice (50) and separating the said supplementary secondary compartment (54) from the main compartment (24) of the first fluid header (18), so that the heat transfer fluid is caused to flow from the inlet tube (34), firstly in only one direction through the main sub-bundle (FP) to the main outlet tube (48), and secondly, in alternate directions in the secondary sub-bundle (FS) to the secondary outlet tube (36), whereby to flow into the secondary compartment (26, 28) of the first fluid header (18) or into a supplementary secondary compartment (92) of, the second fluid header (22).

2. Apparatus according to Claim 1, characterised in that the main sub-bundle (FP) is adapted for example for the cooling of an engine of a motor vehicle, and the secondary sub-bundle (FS) is adapted for example for oil cooling.

3. Apparatus according to Claim 1 or Claim 2, characterised in that the bundle (10) includes a main sub-bundle (FP) and two sub-bundles (FS1, FS2).

4. Apparatus according to Claim 3, characterised in that the first fluid header (18) includes a main inlet tube (34) which is open into the main compartment (24) and which is arranged to supply the main sub-bundle (FP) and one of the secondary sub-bundles (FS1), and a secondary feed tube (146) which is open into a secondary compartment (138) feeding the other secondary sub-bundle (FS2) directly.
